## Europäisches Patentamt

## European Patent Office

## Office européen des brevets

(19)

(11) Veröffentlichungsnummer: **0 050 717**
**B1**

(12) **EUROPÄISCHE PATENTSCHRIFT**

(45) Veröffentlichungstag der Patentschrift:
**07.03.84**

(51) Int. Cl.³: **H 01 M 12/02,** H 01 M 12/06

(21) Anmeldenummer: **81106187.8**

(22) Anmeldetag: **07.08.81**

(54) **Luftsauerstoffelement mit positiven Elektrodenplatten.**

(30) Priorität: **24.10.80 DE 3040093**

(43) Veröffentlichungstag der Anmeldung:
**05.05.82 Patentblatt 82/18**

(45) Bekanntmachung des Hinweises auf die Patenterteilung:
**07.03.84 Patentblatt 84/10**

(84) Benannte Vertragsstaaten:
**CH DE FR GB IT LI SE**

(56) Entgegenhaltungen:
**DE - B - 1 671 867**
**DE - B - 2 331 739**
**DE - B - 2 615 921**

(73) Patentinhaber: **Siller, Bruno, Freigasse 24,
D-7090 Ellwangen (Jagst) (DE)**

(72) Erfinder: **Siller, Bruno, Freigasse 24, D-7090 Ellwangen
(Jagst) (DE)**

(74) Vertreter: **Schroeter, Helmut et al, Bocksgasse 49,
D-7070 Schwäbisch Gmünd (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Luftsauerstoffelement mit positiven Elektrodenplatten

### Anwendungsgebiet, Stand der Technik Die Erfindung bezieht sich auf ein Luftsauerstoffelement mit den im Oberbegriff von Anspruch 1 genannten Merkmalen, wie es durch die DE-AS 23 31 739 bekannt geworden ist. Derartige Luftsauerstoffelemente haben vorzugswseise eine negative Eletrode aus Zink und einen Elektrolyten aus Mangan-(II)chlorid. Die positive, aktive Elektrodenmasse, auch Depolarisatormasse genannt, besteht z.B. aus Aktivkohle mit Beimengungen.

Die Trägerfolie des bekannten Luftsauerstoffelements ist um ein kammförmig ausgestanztes Stück Pappe gefaltet, so dass sich eine einseitig offene Tasche bildet, in die Luft eindringen kann. Die zu Elektrodenplatten gepresste Elektrodenmasse sitzt an den Aussenseiten der Trägerfolie. Der von den Elektrodenplatten bedeckte Teil der Trägerfolien ist mit Durchlochungen versehen, so dass Luft aus der Tasche durch die Trägerfolien in die positiven Elektrodenplatten eindringen kann. Die Luft dringt also aus der Tasche durch die Trägerfolie in je eine Breitseite der Elektrodenplatten ein.

Zum sicheren Festhalten der Elektrodenplatten an der Trägerfolie wird die Anordnung in einen Spannlack, nämlich Zellulosetriazetatlack, getaucht, und zwar so tief, dass nicht nur die Elektrodenplatten selbst sondern ein Teil der über diese hinausragenden Trägerfolien vom Lack überzogen werden.

### Aufgabe, Lösung

Luftsauerstoffelemente mit Manganchlorid als Elektrolyt haben eine sehr hohe spezifische Kapazität (Ah/cm³) und eine ausgezeichnete Lagerfähigkeit. Kleinere Elemente haben aber eine zu geringe Belastbarkeit. Durch die Erfindung soll die Belastbarkeit so gesteigert werden, dass Elemente in der Grösse von Monozellen etwa 200 mA abgeben können, so dass sie Monozellen ersetzen können. Um dies zu erreichen, soll durch die Erfindung die Dicke der plattenförmigen Elemente erheblich herabgesetzt werden, so dass man in einem gegebenen Behälter mehr positive und negative Elektrodenfläche unterbringen kann.

Die erwähnte Aufgabe wird gemäss Anspruch 1 gelöst.

Es hat sich überraschenderweise herausgestellt, dass man eine spezifische Belastbarkeit von 2 mA/cm² Katodenfläche, wie sie bei den bekannten Plattenelementen üblich ist, schon mit wesentlich kleineren als den bisher üblichen Schichtdicken der positiven Elektrodenmasse erzielen kann.

Gemäss der Erfindung wird auf die kammförmig ausgestanzte Platte verzichtet. Die Trägerfolie wird auch nicht mehr U-förmig umgebogen. Vielmehr wird eine Trägerfolie, die nun beiderseits einer Metallfolie je eine Leitfolie aufweist, beiderseits mit je einer positiven Elektrodenplatte versehen. Hierzu wird die Elektrodenmasse aber besonders locker aufgebracht, so dass es ausreicht, sie nur von der Stirnseite her mit Luftsauerstoff zu versorgen. Eine derartige Anordnung wird an der Stirnseite mit einer Abdeckplatte versehen, die Luftzuführung hat. Damit taucht aber das Problem auf, die Luftzuführungen einerseits bei dem üblichen Tauchvorgang von Spannlack freizuhalten, andererseits zu verhindern, dass durch die Luftdurchführungen Elktrolyt in das Innere der positiven Elektrodenplatten eindringt. Zudem muss aber der Spannlack sicher an der Abdeckplatte haften, damit verhindert wird, dass sich die Elektrodenplatten unter dem Einfluss des sich beim Trocknen zusammenziehenden Spannlacks nach aussen krümmen und von der Trägerfolie losreissen, sondern vielmehr an ihre Unterlage gepresst werden. Um all dies zugleich zu erreichen, werden nach Merkmal j von Anspruch 1 die Luftzuführungen durch Seitenwände geschützt.

Die nach der Erfindung geschaffenen positiven Einzelelektroden lassen sich abwechselnd mit negativen Elektroden in einem Behälter in grösserer Anzahl als nach dem Stand der Technik unterbringen, wodurch sich eine höhere Gesamtbelastbarkeit erzielen lässt.

### Weiterbildung der Erfindung

Die nach Merkmal j von Anspruch 1 vorgesehenen Seitenwände, die die Luftzuführungen der Abdeckplatte umgeben und schützen, können nach Anspruch 2 die Abdeckplatte als Ganzes oder einen Teil der Luftzuführungen umgeben. Stattdessen kann man nach Anspruch 3 auch Rohrstutzen vorsehen.

Die positive Elektrodenmasse muss wegen der stirnseitigen Belüftung sehr locker auf die Trägerfolie aufgebracht werden. Es können sich daher Schwierigkeiten ergeben, die Elektrodenmasse beiderseits an der Trägerfolie festzuhalten, bis der Tauchvorgang in Spannlack abgeschlossen ist. Man kann die Oberflächen der Trägerfolie in geeigneter Weise chemisch behandeln, um eine bessere Haftung der Elektrodenmasse zu erzielen. Unter Umständen genügt es jedoch, nach Anspruch 4 die Trägerfolie mit Löchern zu versehen, so dass die beiderseits aufgebrachten Elektrodenmassen sich selbst halten. Diese Löcher sind also im Gegensatz zum Stand der Technik nicht für die Belüftung erforderlich, wenngleich sie einen Luftaustausch zwischen beiden Elektrodenplatten ermöglichen können.

Nach Anspruch 5 oder 6 kann den von der Abdeckplatte freigelassenen Schmalseiten des Elementes ein zusätzlicher mechanischer Schutz gegeben werden.

Ein Einzelelement nach einem der Ansprüche 1 bis 5 hat besondere Bedeutung dann, wenn es darauf ankommt, es in einem sehr flachen Raum unterzubringen. Durch eine Parallelschaltung derartiger Einzelelemente lässt sich die Kapazität erhöhen, was sich auf umständliche und kostspielige Weise durch Zusammenlöten der Einzelelemente erreichen liesse. Nach Anspruch 7 lässt sich eine Parallelschaltung aus mehreren Einzelelementen ohne Lötvorgänge oder dergleichen schaffen. Da die Einzelelemente sehr dünn sind, erhält man auf diese Weise in einem gegebenen Raum ein Element grösserer Kapazität als mit herkömmlichen positiven Elektrodenplatten. Nach Anspruch 7 kann eine durchgehende Trägerfolie beiderseits mit einzelnen positiven Elektrodenplatten versehen und dann mäanderartig gefaltet werden. Die negative Elektrode wird ebenfalls mäanderartig gefaltet, so dass jeweils ein Stück Elektrodenblech zwischen zwei positiven Elektrodenplatten liegt. Auf diese Weise lässt sich eine Anzahl positiver und negativer Elektrodenplatten je für sich parallelschalten, ohne dass man Lötstellen benötigt. Ein Luftsauerstoffelement dieser Art hat also nicht nur eine hohe spezifische Kapazität und hohe spezifische Belastbarkeit, sondern ist auch mit geringen Kosten zu fertigen.

Nach Anspruch 8 kann man durch eine einfache räumliche Anordnung dafür sorgen, dass unter Vermeidung von Kurzschlüssen die beiden ineinandergreifenden Mäander beider Elektroden gegen Längsverschiebung gesichert sind.

Erläuterung der Erfindung

Ausführungsbeispiele der Erfindung werden im folgenden anhand der Zeichnungen erläutert:

Figur 1 zeigt eine positive Elektrodenanordnung perspektivisch und teilweise im Schnitt mit verschiedenen Arten von Seitenwänden, die die Luftzuführungen schützen.

Figur 2 zeigt in Seitenansicht zwei Varianten einer Elektrodenanordnung mit einem Rahmen, der drei Schmalseiten der Elektrodenanordnung abdeckt.

Figur 3 und 4 zeigen in waagerechtem Längsschnitt bzw. in Seitenansicht eine positive Elektrodenanordnung, die für eine mäanderartige Faltung geeignet ist.

Figur 5 ist eine Prinzipskizze zur Verdeutlichung des Begriffes «Mäander».

Figur 6 zeigt in Draufsicht eine mäanderartig gefaltete positive Elektrodenanordnung.

Figur 7 zeigt in Seitenansicht eine negative Elektrode, die für eine mäanderartige Faltung geeignet ist.

Figur 8 zeigt die gegenseitige Lage der beiden mäanderartig gefalteten Elektroden.

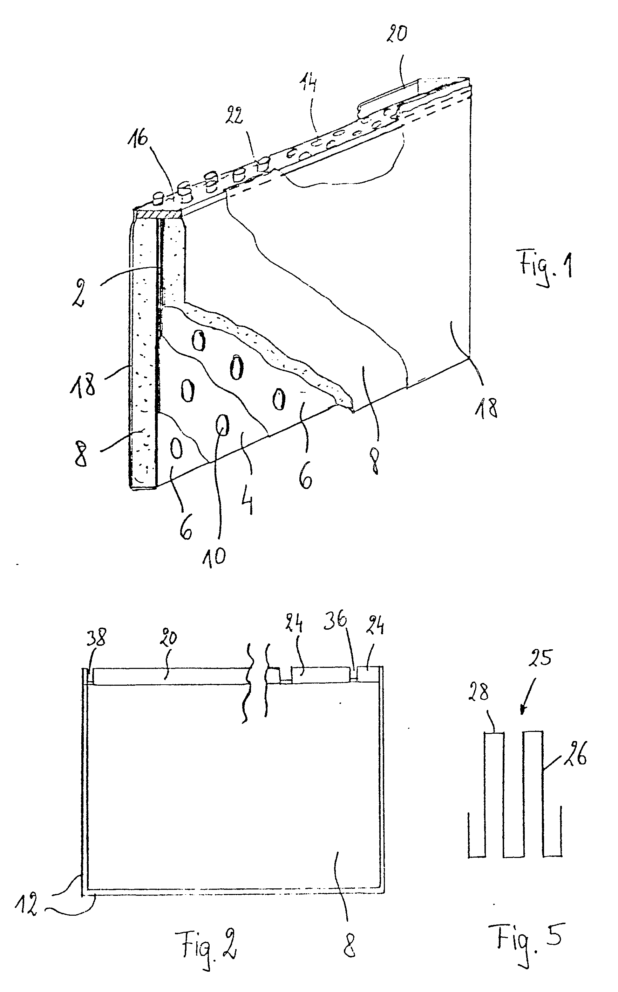

Figur 1 und 2 zeigen die positive Elektrodenanordnung eines Luftsauerstoffelements. Es wird wie üblich durch Hinzufügung einer negativen Elektrode, z.B. aus Zink, und eines Elektrolyten, z.B. Mangan(II)chlorid, zu einem Luftsauerstoffelement vervollständigt, wobei die negative Elektrode selbst den Behälter bildet oder zusätzlich ein Behälter, z.B. aus Kunststoff, vorgesehen ist.

Die als Ganzes mit 2 bezeichnete Trägerfolie besteht aus einer Metallfolie 4, z.B. aus Aluminium, die beiderseits mit je einer Leitfolie 6 bedeckt ist. Die Leitfolie besteht aus Kunststoff, insbesondere Polyisobutylen, das durch einen Zusatz von Graphit leitend gemacht ist. Während die Leitfähigkeit der Leitfolien 6 für den Durchschritt von Elektroden quer zu ihrer Hauptebene ausreicht aber für eine Stromleitung längs ihrer Fläche ohne wesentlichen Spannungsabfall zu klein ist, sorgt die Metallfolie 4 für eine ausreichende Leitfähigkeit in ihrer Fläche.

Auf die Trägerfolie 2 wird beiderseits je ein plattenartiges Gebilde aus positiver Elektrodenmasse aufgebracht, das dann die positiven Elektrodenplatten 8 bildet. Die Elektrodenmasse kann aus einem Gemisch von Aktivkohle, Russ und Manganchlorid-Elektroylt bestehen. Die Elektrodenmasse wird in möglichst lockerer und damit luftdurchlässiger Form auf die Trägerfolie gebracht, wobei dafür gesorgt werden muss, dass die Masse zunächst irgendwie an der Trägerfolie haftet, bevor sie durch den Spannlack festgehalten wird. Bei manchen Trägerfolien kann man dies dadurch erreichen, dass man die Leitfolien einfach mit Benzin befeuchtet. Stattdessen kann man zum Kleben eine Lösung von Polyisobutylen, die mit Russ versetzt ist, auf die Leitfolien 6 sprühen. Stattdessen oder zusätzlich kann man Löcher 10 in die Trägerfolie stanzen, so dass die beiden lockeren, plattenartigen Gebilde aus Elektrodenmasse sich gegenseitig, durch die Löcher hindurch, an der Trägerfolie halten. Zusätzlich kann man mit einem Streifen aus Kunststoffmaterial mindestens die untere Schmalseite der positiven Elektrodenanordnung abdecken. Vorzugsweise wird aus den Streifen ein U-förmiger Rahmen 12 gebildet, der die drei Schmalseiten, nämlich die beiden seitlichen und die untere umgibt.

Zur Belüftung der positiven Elektrodenplatten im Betrieb dienen Luftzuführungen 14, die in einer Abdeckplatte 16 vorgesehen sind. Die Abdeckplatte 16 deckt die Stirnseite der Anordnung ab. Zum Aufbringen der positiven Elektrodenmasse werden in eine Presse die Trägerfolie 2 und die Abdeckplatte 16 eingelegt, eventuell zusätzlich der U-förmige Rahmen 12. Die Masse wird dann zwischen diese Teile und auf die beiden Seiten der Trägerfolie 2 gepresst. Anschliessend wird das ganze Gebilde in einen Spannlack, insbesondere Zellulosetriazetatlösung, getaucht, und zwar so weit, dass die Abdeckplatte 16 mit benetzt wird. Der sich beim Trocknen zusammenziehende Lacküberzug 18 hält alle Bestandteile sicher und fest zusammen, besonders gut dann, wenn die Breite der Abdeckplatte 16 etwas kleiner ist als die Gesamtdicke von Trägerfolie 2 und Elektrodenplatten 8.

Um zu verhindern, dass beim Tauchvorgang Spannlack und später Elektrolyt in die positiven Elektrodenplatten 8 eindringt, müssen die Luftzuführungen 14 seitlich geschützt werden. Dies kann in verschiedener Weise geschehen. Man kann die ganze Abdeckplatte 16 durch einen Rahmen 20 umgeben (Fig. 1 hinten, Fig. 2 links), so dass sich eine flache Schale ergibt. Man kann stattdessen jede einzelne Luftzuführung durch einen Rohrstutzen 22 umgeben (Fig. 1 vorn), oder man kann jeweils mehrere Luftzuführungen gemeinsam durch einen Rahmen 24 umgeben (Fig. 2 rechts).

Die positive Elektrodenanordnung hat eine Anschlussfahne zur Stromableitung, die oben durch die Abdeckplatte oder seitlich herausragt (nicht dargestellt).

Die so gebildete positive Elektrodenanordnung kann zur Bildung eines Elements in einen Behälter gebracht werden, der eine z.B. U-förmig gebogene negative Elektrode aus Zinkblech enthält, derart, dass die beiden Schenkel der negativen Elektrode die beiden positiven Elektrodenplatten 8 umgeben, wobei zwischen beide Elektrolyt in Form von Mangan(II)chloridlösung mit Verdickungsmittel gefüllt wird.

Zur Herstellung von Elementen grösserer spezifischer Belastbarkeit werden nach Figur 3 und 4 auf eine durchgehende streifenförmige Trägerfolie 2' beiderseits positive Elektrodenplatten 8' gepresst, wobei jeweils zwischen den Elektrodenplatten ein Abstand verbleibt, der später ein Falten der Anordnung gestattet. Die positive Elektrodenanordnung, wie auch die negative Elektrode werden mäanderförmig gefaltet, wobei unter «Mäander» 25 ein Gebilde nach Figur 5 verstanden werden soll, das eine Anzahl langer Schenkel 26 und sie unter rechten Winkeln verbindende kurze Schenkel 28 hat.

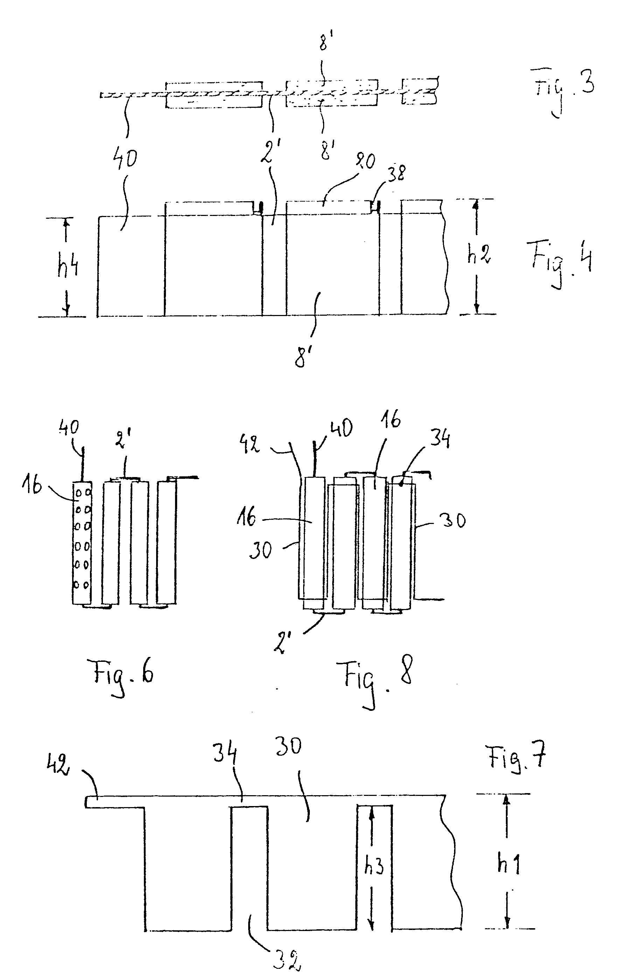

Figur 6 zeigt die mäanderartig gefaltete positive Elektrodenanordnung für sich, und zwar von oben gesehen. Man erkennt die Abdeckplatten 16, die mit den darunterliegenden übrigen Teilen der positiven Elektrodenanordnung die langen Schenkel bilden. Die langen Schenkel sind durch die Trägerfolienstücke 2', die die kurzen Schenkel des Mäanders bilden, miteinander verbunden.

Die zugehörige negative Elektrode 30 (Figur 7) wird aus Zinkblech gestanzt. Ihre Gesamthöhe h1 ist gleich gross wie oder etwas grösser als die Gesamthöhe h2 der positiven Elektrodenanordnung, und zwar einschliesslich der Abdeckplatte 16 und ihres Rahmens 20 oder ihrer Rohrstutzen 22. Die negative Elektrode 30 hat Ausschnitte 32, deren Höhe h3 grösser ist als die Höhe h4 der positiven Elektrodenanordnung, so dass verbleibende Stege 34 der negativen Elektrode beim Ineinandergreifen der beiden Mäander die Trägerfolien 2' berührungsfrei überqueren können.

Figur 8 zeigt, wie die beiden je für sich mäanderartig gefalteten Elektroden ineinandergreifen. Die negative Elektrode 30 überquert hier mit ihren Stegen 34 die positive Elektrodenanordnungen jeweils ein Stück vor deren Ende. Gegen Verrutschen in Richtung der langen Mäanderschenkel werden beide Elektroden dadurch gesichert, dass die Stege 34 der negativen Elektrode entweder durch Schlitze 36 zwischen Rahmen 24 der Abdeckplatte 16 geführt sind (Figur 2) oder dass man sie zwischen Rohrstutzen 22 hindurchführt. Möglicherweise ist es zweckmässiger, die Stege 34 durch einen Schlitz 38 (Figur 2) unmittelbar neben dem oberen Ende des Rahmens 12 zu führen.

Die positive und die negative Elektrode haben an ihrem einen Ende je eine Anschlussfahne 40, 42 zur Sromableitung.

**Patentansprüche**

1. Luftsauerstoffelement mit plattenförmigen Elektroden, das folgende Bestandteile hat:

a) Eine auch zur Stromableitung dienende Trägerfolie, die aus einer Metallfolie mit anhaftender Leitfolie besteht;
b) eine positive, aktive Elektrodenmasse, die an der Leitfolie haftet;
c) ein Überzug aus Spannlack, der die Trägerfolie und die Elektrodenmasse zusammenhält;
d) Luftzuführungen zur positiven Elektrodenmasse;
e) ein Behälter, eine negative Elektrode und ein Elektrolyt,

gekennzeichnet durch folgende Merkmale:

f) Zur Bildung der Trägerfolie (2) ist die Metallfolie (4) beiderseits mit je einer Leitfolie (6) versehen;
g) beide Seiten der Trägerfolie (2) sind mit positiver Elektrodenmasse in Form eines lockeren, luftdurchlässigen, plattenartigen Gebildes versehen (positive Elektrodenplatten 8);
h) die Stirnseite dieser Anordnung ist mit einer Abdeckplatte (16) versehen, die durch einen Überzug (18) des Spannlacks mit den durch den Lack zusammengehaltenen positiven Elektrodenplatten fest verbunden ist;
i) die Luftzuführungen (14) sind Durchbrechungen der Abdeckplatte (16);
j) die Luftzuführungen (14) sind durch vorstehende Seitenwände gegen das Eindringen von Spannlack und Elektrolyt geschützt.

2. Luftsauerstoffelement nach Anspruch 1, dadurch gekennzeichnet, dass die Seitenwände die Form eines Rahmens (20) haben, der die Abdeckplatte (16) als Ganzes umgibt oder eines Rahmens (24), der einen Teil der Luftzuführungen (14) umgibt.

3. Luftsauerstoffelement nach Anspruch 1, dadurch gekennzeichnet, dass die Seitenwände Rohrstutzen (22) sind, die je eine der Luftzuführungen (14) umgeben.

4. Luftsauerstoffelement nach einem der vorangehenden Ansprüche, dadurch gekennzeichnet, dass die Trägerfolie (2) Löcher (10) aufweist.

5. Luftsauerstoffelement nach einem der vorangehenden Ansprüche, dadurch gekennzeichnet, dass zumindest an der unteren Schmalseite der positiven Elektrodenanordnung, innerhalb des Lacküberzuges (18), ein Streifen aus Isoliermaterial vorgesehen ist.

6. Luftsauerstoffelement nach Anspruch 5, dadurch gekennzeichnet, dass auch die beiden anderen Schmalseiten durch einen Streifen aus Isoliermaterial geschützt sind, und dass insbesondere die Streifen einen U-förmigen Rahmen (12) bilden.

7. Luftsauerstoffelement nach einem der vorangehenden Ansprüche, gekennzeichnet durch folgende Merkmale:

a) Die Trägerfolie (2') ist zu einem Rechteckmäander (25) (1. Mäander) gefaltet;

b) die zueinander parallelen langen Schenkel (26) des 1. Mäanders sind beiderseits mit positiven Elektrodenplatten (8') versehen;

c) eine negative, insbesondere aus Zinkblech bestehende Elektrode (30) ist zu einem gleichartigen Rechteckmäander (2. Mäander) gefaltet;

d) beide Mäander greifen derart ineinander, dass je einer der langen Schenkel des 2. Mäanders zwischen zwei positiven Elektrodenplatten (8') bzw. ausserhalb der äussersten positiven Elektrodenplatten liegt;

e) die kurzen Schenkel mindestens eines der beiden Mäander, insbesondere des 2. Mäanders sind bis auf schmale Stege (34) weggeschnitten, und beide Mäander kreuzen einander ohne elektrischen Kontakt zwischen positiver und negativer Elektrode.

8. Luftsauerstoffelement nach Anspruch 7, dadurch gekennzeichnet, dass die Stege (34) der negativen Elektrode (30) oberhalb der Abdeckplatten (16) gegen Verschiebung in deren Längsrichtung durch die Rohrstutzen (22) oder die die Luftzuführungen (14) umgebenden Seitenwände (24, 20) und/oder die nach oben verlängerten U-förmigen Rahmen (12) gehaltert sind.

## Claims

1. Atmospheric oxygen element with plate shaped electrodes, having the following constituents:

a) A carrier foil serving also for conducting an elelctrical current and comprising a foil with adhering conductive sheet;

b) a positive active electrode mass adhering to the conductive sheet;

c) a coating of a tensioning varnish holding together the carrier foil and the electrode mass;

d) air conduits leading to the positive electrode mass;

e) a container, a negative electrode and an electrolyte,

characterized by the following features:

f) The metal foil (4) is provided at its both sides with a conductive sheet (6) each, thus forming the carrier foil (2);

g) both sides of the carrier foil (2) are provided with positive electrode mass in form of a loose air-permeable platelike structure (positive electrode plates 8);

h) the front side of this arrangement is provided with a cover plate (16) secured to the positive electrode plates by a coating (18) of the tensioning varnish, which electrode plates are held together by the varnish;

i) the air conduits (14) are perforations of the cover plate (16);

j) the air conduits (14) are protected by protruding sidewalls against the penetration of tensioning varnish and electrolyte.

2. Atmospheric oxygen element according to claim 1, characterized in that the side walls have the shape of a frame (20) surrounding the cover plate (16) as a whole or of a frame (24) surrounding part of the air conduits (14).

3. Atmospheric oxygen element according to claim 1, characterized in that the side walls are pipe portions (22) surrounding one of the air conduits (14) each.

4. Atmospheric oxygen element according to one of the preceding claims, characterized in that the carrier foil (2) has holes (10).

5. Atmospheric oxygen element according to one of the preceding claims, characterized in that a strip of insulating material is provided at least at the lower small side of the positive electrode arrangement within the varnish coating (18).

6. Atmospheric oxygen element according to claim 5, characterized in that also the two other small sides are protected by a strip of insulating material and in that especially the strips are forming a U-shaped frame (12).

7. Atmospheric oxygen element according to one of the preceding claims, characterized by the following features:

a) The carrier foil (2') is folded to form a rectangular meander (25) (1st meander);

b) the long legs (26) of the 1st meander arranged in parallel to each other are provided at both sides with positive electrode plates (8');

c) a negative electrode (30), especially consisting of zinc sheet, is folded to form a similar rectangularly shaped meander (2nd meander);

d) both meanders are meshing in such a way that one each of the long legs of the 2nd meander is lying between two positive electrode plates (8') or outside of the outermost positive electrode plates;

e) the small legs of at least one of both meanders, especially of the 2nd meander, are cut away, save for small bridges (34), and both meanders are crossing each other without electrical contact between the positive and the negative electrode.

8. Atmospheric oxygen element according to claim 7, characterized in that above the cover plates (16) the bridges (34) of the negative electrode (30) are held against displacement in their longitudinal direction by the pipe portions (22) or the side walls (24, 20) surrounding the air conduits (14) and/or by the U-shaped frame (12) which is prolongated upwards.

## Revendications

1. Pile à dépolarisation par l'air avec électrodes en forme de plaque, qui présente les éléments suivants:

a) une feuille porteuse servant à la sortie du courant et qui est formée d'une feuille métallique, à laquelle adhère une feuille conductrice,

b) une matière active positive d'électrode, qui adhère à la feuille conductrice,

c) un revêtement de laque de tension, qui maintient assemblées la feuille porteuse et la matière d'électrode,

d) des amenées d'air à la matière positive d'électrode,

e) un récipient, une électrode négative et un électrolyte, caractérisée par les points suivants:

f) pour la formation de la feuille porteuse (2), la feuille métallique (4) est munie sur chacun de ses côtés d'une feuille conductrice (6),

g) les deux côtés de la feuille porteuse (2) sont munis de matière positive d'électrode sous la forme d'une structure en forme de plaque, peu serrée et perméable à l'air (plaques d'électrode positives),

h) le côté frontal de cette disposition est muni d'une plaque de recouvrement (16), qui est relié solidairement, par un revêtement (18) de la laque de tension, aux plaques d'électrode positives maintenues assemblées par la laque,

i) les amenées d'air (14) sont des perforations de la plaque de recouvrement (16),

j) les amenées d'air (14) sont protégées, par des parois latérales dépassantes, contre la pénétration de laque de tension et d'électrolyte.

2. Pile à dépolarisation par l'air selon la revendication 1, caractérisée par le fait que les parois latérales ont la forme d'un cadre (20), qui entoure la plaque de recouvrement (16) dans son ensemble, ou d'un cadre (24), qui entoure une partie des amenées d'air (14).

3. Pile à dépolarisation par l'air selon la revendication 1, caractérisée par le fait que les parois latérales sont des tubulures (22), qui entourent chacune l'une des amenées d'air (14).

4. Pile à dépolarisation par l'air selon l'une des revendications précédentes, caractérisée par le fait que la feuille porteuse (2) présente des trous (10).

5. Pile à dépolarisation par l'air selon l'une des revendications précédentes, caractérisée par le fait qu'au moins au petit côté inférieur de la disposition d'électrode positive est prévue, à l'intérieur du revêtement de laque (18), une bande de matière isolante.

6. Pile à dépolarisation par l'air selon la revendication 5, caractérisée par le fait que les deux autres petits côtés aussi sont protégés par une bande de matière isolante et qu'en particulier, les bandes forment un cadre en U (12).

7. Pile à dépolarisation par l'air selon l'une des revendications précédentes, caractérisée par les points suivants:

a) la feuille porteuse (2') est pliée en zig-zag à angle droit (25) (1er zig-zag);

b) les ailes longues parallèles entre elles (16) du premier zig-zag sont munies, des deux côtés, de plaques d'électrode positives (8');

c) une électrode négative (30), en particulier formée de tôle de zinc, est pliée en un zig-zag à angle droit similaire (2ème zig-zag);

d) les deux zig-zags s'engagent l'un dans l'autre de telle sorte que l'une des ailes longues du 2ème zig-zag est chaque fois située entre deux plaques d'électrode positives (8') ou à l'extérieur des plaques d'électrode positives les extérieures,

e) les ailes courtes d'au moins un des deux zig-zags, en particulier du 2ème zig-zag, sont découpées à l'exception de filets étroits (34) et les deux zig-zags se coupent sans contact électrique entre électrodes positive et négative.

8. Pile à dépolarisation par l'air selon la revendication 7, caractérisée par le fait que les filets (34) de l'électrode négative (30) sont maintenus au-dessus des plaques de recouvrement (16) contre le coulissement dans leur direction longitudinale, par les tubulures (22) ou par les parois latérales (24, 20) entourant les amenées d'air (14) et/ou les cadres en U (12) prolongés vers le haut.

Fig. 1

Fig. 2

Fig. 5

Fig. 3

Fig. 4

Fig. 6

Fig. 8

Fig. 7